# EUROPÄISCHE PATENTSCHRIFT

(11) **EP 3 558 160 B1**
(45) Veröffentlichungstag und Bekanntmachung des Hinweises auf die Patenterteilung: **31.03.2021**
(21) Anmeldenummer: 17829982.2
(22) Anmeldetag: 22.12.2017
(51) Int. Cl.: A61C 19/10, H04N 5/232, G06T 7/73

(54) **VERFAHREN ZUR AUSRICHTUNG EINER KAMERA ODER SCANVORRICHTUNG MIT EINEM DENTALHILFSELEMENT**
CAMERA ALIGNMENT OR SCANNING APPARATUS METHOD WITH A DENTAL REFERENCE ELEMENT
PROCÉDÉ D'ORIENTATION D'UNE CAMÉRA OU D'UN SCANNER AVEC UN ELEMENT DENTAIRE DE REFERENCE

(30) Priorität: 22.12.2016 EP 16206420
(43) Veröffentlichungstag der Anmeldung: 30.10.2019
(73) Patentinhaber: Ivoclar Vivadent AG, 9494 Schaan (LI)
(72) Erfinder: SCHLEGEL, Manuel, 8887 Mels (CH); PAULER, Markus, 6800 Feldkirch (AT)
(74) Vertreter: Baronetzky, Klaus
(86) Internationale Anmeldenummer: PCT/EP2017/084381
(87) Internationale Veröffentlichungsnummer: WO 2018/115437

(56) Entgegenhaltungen:
- EP-A1- 1 779 806
- EP-B1- 2 255 749
- WO-A1-2012/038474
- KR-B1- 101 315 862

## Beschreibung

Die Erfindung betrifft ein Verfahren zur Annäherung an eine ausgerichtete relative Position zwischen einer Kamera oder Scanvorrichtung und einem Dentalhilfselement für die Aufnahme des Dentalhilfselements gemäß dem Oberbegriff von Anspruch 1 bzw. 2.

Für die Herstellung eines Prothesenzahns ist es unter anderem wichtig, einen möglichst geringen Farbunterschied zwischen dem Prothesenzahn und dem benachbarten natürlichen Zahn bzw. den benachbarten natürlichen Zähnen zu erreichen, um dem Restaurat ein natürliches Erscheinungsbild geben zu können.

Hierzu ist der erste Schritt, die Farbe des betreffenden natürlichen Zahns zu ermitteln. Es wurde vorgeschlagen, mit Hilfe einer Referenz durch einen Vergleich die Zahnfarbe zu bestimmen.

Zu solchen Referenzen gehören Farbschlüssel, die als Hilfsmittel für die Auswahl der Zahnfarbe dienen. Ein solcher Farbschlüssel ist aus der Druckschrift EP 2 255 749 B1 bekannt. Der dortige (Mini-)Farbschlüssel weist eine Vielzahl von Farbmustern auf, die nach der Art einer Matrix angeordnet sind. Jedes Farbmuster entspricht einer handelsüblichen Zahnfarbe, und bevorzugt sind einander ähnliche Zahnfarben benachbart angeordnet. Der dortige Farbschlüssel wird auf einem Zahn befestigt, und zwar auf dessen vertibulärer Fläche. Durch einen optischen Vergleich gelingt es, die Übereinstimmung eines Farbmusters mit einer Fläche eines Nachbarzahns zu erfassen, so dass für diese Fläche die Zahnfarbe festliegt und damit erfasst ist.

Die Druckschrift EP 1 779 806 A1 betrifft ein System zum Anordnen eines kieferorthopädischen Elements, wie beispielsweise eines Brackets, auf der Oberfläche eines Zahns eines Patienten, der einer kieferorthopädischen Behandlung unterzogen - wird. Von einer Kamera wird ein Bild des Zahns aufgenommen.

Die Druckschrift, WO 2012/038474 A1, betrifft ein Verfahren zum Bestimmen einer Zahnfarbe. Es wird ein digitales Bild des Zahns mittels einer Kamera aufgenommen, dass eine Farbtabelle zeigt.

Die Druckschrift KR 101 315 862 B1 betrifft ein Zahnfarbanpassungssystem, um die Objektivität der Zahnfarbenauswahl und den Benutzerkomfort zu verbessern Eine korrekte Zahnfarbbestimmung ist aber schwierig, weil die Zahnfarbe nicht allein nur durch die Farbe bestimmt werden kann. Die Transluzenz und Helligkeit des natürlichen Zahns, welche unter anderem der Zahnstruktur unterliegen, spielen ebenfalls eine große Rolle für die Zahnfarbbestimmung.

Es wurde ferner vorgeschlagen, durch eine Kamera Fotos des Zahns aufzunehmen. Mit den Fotos wird eine Bildanalyse vorgenommen, deren Ergebnis als gemessene Farbe mindestens eines Bereiches des Zahns bestimmt wird.

Der Zahn verhält sich ferner metamerisch, und das Erscheinungsbild des Zahns ändert sich je nach gegebener Lichtsituation und Betrachtungswinkel - sowohl für menschliche Augen, als auch für ein aufgenommene Foto des Zahns und/oder des Farbschlüssels. Diese äußeren Faktoren erschweren auch die Bestimmung der Zahnfarbe.

Daher liegt der Erfindung die Aufgabe zugrunde, ein Verfahren gemäß dem Oberbegriff von Anspruch 1 zu schaffen, mit welchem zumindest eine einfachere und präzisere Farbauswahl möglich ist.

Diese Aufgabe wird erfindungsgemäß durch Anspruch 1 gelöst. Vorteilhafte Weiterbildungen ergeben sich aus den Unteransprüchen.

Erfindungsgemäß wird für die Aufnahme eines Dentalhilfselements, wie eines Minifarbschlüssels, ggf. samt einem zu vergleichenden Zahn, eine relative Position zwischen einer Kamera oder Scanvorrichtung und einem Dentalhilfselement ausgerichtet. Nach der Ausrichtung bleibt durch z.B. eine intelligente Software in Kombination mit einer Bildverarbeitung die Kameraposition gleich. Eine immer gleichbleibende Kameraposition bzw. Aufnahmesituation bedeutet konkret, dass der Abstand der Kamera oder Scanvorrichtung zum Dentalhilfselement, die Ausrichtung der Kamera oder Scanvorrichtung relativ zum Dentalhilfselement und der Betrachtungswinkel konstant gehallten werden müssen.

In einer bevorzugten Ausführungsform ist es vorgesehen, dass mindestens eine Asymmetrie in Form einer Markierung oder Schabone sowohl bei dem Dentalhilfselement, als auch bei der Kamera oder Scanvorrichtung eingesetzt wird. Bei der Ausrichtung wird die Asymmetrie am Dentalhilfselement mit der Asymmetrie an der Kamera oder Scanvorrichtung in Deckung gebracht. Bei einer vollständigen Deckung ist erfindungsgemäß die Ausrichtung gegeben.

Dadurch können erfindungsgemäß alle vorgenannten äußeren Faktoren wie z.B. Lichtsituation bzw. Einflüsse auf die Aufnahme für die Farbbestimmung konstant gehalten werden.

In einer weiteren bevorzugten Ausführungsform ist es vorgesehen, dass auf dem Dentalhilfselement eine Markierung mit mindestens einer Asymmetrie angebracht ist. Eine mit der Markierung kongruente oder mathematisch ähnliche Schablone wird auf einer Anzeigevorrichtung der Kamera oder Scanvorrichtung eingeblendet. Für die Ausrichtung der Kamera oder Scanvorrichtung wird anschließend die Schablone mit der Markierung in Deckung gebracht.

Zur Bestimmung, ob sich die Schablone vollständig mit der Markierung deckt, kann man mit bloßem Auge durch die Kamera oder über die Scanvorrichtung beobachten, ob lediglich der ausgeschnittene Teil der Schablone, aber nicht auch die Bereiche außerhalb des ausgeschnittenen Teils der Schablone, durch die Markierung gefüllt ist.

Es ist erfindungsgemäß günstig, dass bei der Ausrichtung aufgrund der auf der Anzeigevorrichtung der Kamera oder Scanvorrichtung eingeblendeten Schablone zwischen dem Teil der Markierung innerhalb des ausgeschnittenen Teils der Schablone und dem Teil der Markierung außerhalb des ausgeschnittenen Teils der Schablone ein Farbunterschied besteht. Der Teil der Markierung innerhalb des ausgeschnittenen Teils der Schablone hat eine relativ natürliche Farbe, während der Teil der Markierung außerhalb des ausgeschnittenen Teils der Schablone eine opake Farbe aufweist. Somit ist es für den Beobachter ersichtlich, ob bei der Ausrichtung sich die Schablone bereits vollständig mit der Markierung deckt oder nicht.

In einer weiteren bevorzugten Ausführungsform ist es vorgesehen, dass zusätzlich dazu, dass auf dem Dentalhilfselement eine Markierung mit mindestens einer Asymmetrie angebracht ist, mindestens ein Teil des Dentalhilfselements oder lediglich dieser allein mit einer Asymmetrie als Markierung verwendet wird. Für die Ausrichtung der Kamera oder Scanvorrichtung wird anschließend die Schablone mit dem Teil des Dentalhilfselements in Deckung gebracht.

Falls das Dentalhilfselement in Form eines (Mini-)Farbschlüssels ist, der eine Vielzahl von Farbmustern aufweist, die je würfelförmig und nach der Art einer Matrix angeordnet sind, kann ein Teil dieser Farbmuster mit einer asymmetrischen Anordnung als Markierung verwendet werden.

In einer weiteren bevorzugten Ausführungsform ist es vorgesehen, dass in der Kamera oder in der Scanvorrichtung oder in einem Speicher für die Kamera oder in einem Speicher für die Scanvorrichtung eine mit der Markierung oder mindestens einem Teil des Dentalhilfselements kongruente oder mathematisch ähnliche Schablone als virtuelles Bild hinterlegt ist. Für die Ausrichtung der Kamera oder Scanvorrichtung wird die Schablone mit der Markierung oder dem einen Teil des Dentalhilfelements in Deckung gebracht.

In dem Speicher für die Kamera oder Scanvorrichtung können eine Vielzahl von solchen virtuellen Bildern abgespeichert sein, welche virtuelle Schablonen in unterschiedlichen Formen je entsprechend einer Markierung zeigen.

Es ist günstig, dass mit den virtuellen Schablonen die Herstellung von realen Schablonen vermieden wird und die Speicherung und das Management von Schablonen ebenfalls vereinfacht wird.

Erfindungsgemäß ist es noch günstiger, dass durch die Kamera oder Scanvorrichtung eine noch nicht erfolgreiche Ausrichtung bzw. Deckung der virtuellen Schablone mit der Markierung erkannt werden kann und dann für den Bediener eine Annäherung an die Deckung signalisiert wird.

Der automatische Erkennungsprozess durch die Kamera oder Scanvorrichtung kann ähnlich wie derjenige mit bloßem Auge des Bedieners laufen. Dieser kann aber auch basierend auf einer anderen an sich bekannten Weise funktionieren. Es ist vorteilhaft, dass die Präzision der automatischen Erkennung der Deckung deutlich höher als diejenige bei der menschlichen Beobachtung sein kann.

Es ist besonders günstig, durch die Kamera oder Scanvorrichtung eine Annährung an die Deckung zu signalisieren. Dadurch wird der Bediener angewiesen, den Abstand zwischen des Dentalhilfselements und der Kamera/Scanvorrichtung und/oder die Position der Kamera/Scanvorrichtung und/oder die Orientierung der Kamera/Scanvorrichtung und/oder den Winkel der Kamera/Scanvorrichtung zum Dentalhilfselement zu justieren.

In einer weiteren bevorzugten Ausführungsform ist es vorgesehen, dass in der Kamera oder in der Scanvorrichtung oder in einem Speicher für die Kamera oder in einem Speicher für die Scanvorrichtung charakterisierende Eigenschaften der Markierung oder mindestens eines Teils des Dentalhilfselements, insbesondere bezüglich der Entfernungen von Punkten voneinander und/oder der Winkel zwischen Linien und/oder der Positionen von Punkten und Linien und/oder der Farbwerte von Punkten, hinterlegt sind.

Für die Annäherung an die ausgerichtete relative Position zwischen der Kamera oder Scanvorrichtung und dem Dentalhilfselement werden basierend auf den hinterlegten Eigenschaften die Eigenschaften der Markierung oder des Teils des Dentalhilfselements gesucht werden. Insbesondere wird beim Suchen eine Identifikation zumindest einer der Eigenschaften erfasst und signalisiert.

Beispielsweise besteht die Markierung aus vier runden Punkten mit einem gleichen Durchmesser, welche Punkte in den vier Ecken eines Quadrates angeordnet sind. In diesem Fall sind Informationen hierzu hinterlegt: Vier runde Punkte mit einem gleichen Durchmesser, und die Abstände zwischen den vier Punkten stehen im Verhältnis 1:1:Wurzel(2) zueinander.

In einem Bildbearbeitungsschritt wird dann nach runden Punkten mit einem identischen Durchmesser gesucht. Die gefundenen Punkte werden anschließend auf die weiteren Informationen untersucht, bis alle vier Punkten identifiziert sind.

Es ist günstig, dass mit den hinterlegten Eigenschaften die Herstellung von realen Schablonen ebenfalls vermieden wird.

Außerdem bietet diese Ausführungsform die Möglichkeit, in der Kamera bzw. Scanvorrichtung Eigenschaften von Markierungen oder Teilen des Dentalhilfselements einfach zu ändern bzw. zu aktualisieren.

In einer weiteren bevorzugten Ausführungsform ist es vorgesehen, dass Hilfselemente wie Pfeile auf einer optischen Fläche der Kamera oder Scanvorrichtung eingeblendet werden, wenn die Deckung noch nicht erreicht ist. Die Hilfselemente können in die Richtung verweisen, in die die Deckung erreicht werden kann.

Beispielsweise bedeutet ein auf der optischen Fläche der Kamera oder Scanvorrichtung angezeigter, nach rechts weisender Pfeil, dass die Kamera/Scanvorrichtung nach rechts bewegt werden sollte. Vier Pfeile, die jeweils nach oben, unten, links und rechts weisen, bedeuten, dass der Abstand zwischen dem Zahn und der Kamera/Scanvorrichtung vergrößert werden sollte. Ein gebogener Pfeil oder zwei einander gegenüberliegende, gebogene Pfeile bedeuten, dass die Orientierung der Kamera/Scanvorrichtung zum Zahn bzw. zum Dentalhilfselement dementsprechend reguliert werden sollte. Ein nach rechts in einen schwarzen Punkt weisender Pfeil bedeutet, dass der rechte Teil der Kamera/Scanvorrichtung um eine Achse parallel zur Markierung des Dentalhilfselements zu diesem hin gedreht werden sollten, damit der geforderte Aufnahmewinkel zwischen der Kamera/Scanvorrichtung und dem Dentalhilfselement z.B. genau 90° ist.

In einer weiteren bevorzugten Ausführungsform ist es vorgesehen, dass die Schablone auf einer optischen Fläche der Kamera oder Scanvorrichtung eingeblendet wird. Hierzu kann die Schablone in an sich bekannter Weise benachbart dem Gehäuse der Kameralinse verbunden werden, so dass sich die Schablone, insbesondere der ausgeschnittene Teil der Schablone, zentral auf der Kameralinse und in Deckung mit dieser befindet.

In einer weiteren bevorzugten Ausführungsform ist es vorgesehen, dass die physikalische vorliegende Schablone auf einem virtuellen Bild eingeblendet wird und von einer Bilderkennungsvorrichtung erfasst wird. Dieses Bild kann vorab in einem Speicher für die Kamera oder Scanvorrichtung abgespeichert werden. Bei dem Ausrichtungsprozess wird das Bild aus dem Speicher abgerufen und auf einer Anzeigevorrichtung der Kamera oder Scanvorrichtung angezeigt. In das Bild wird anschließend eine virtuelle Schablone eingeblendet und danach von einer Bilderkennungsvorrichtung erfasst. Dieses Bild samt der eingeblendeten Schablone wird zur Ausrichtung verwendet.

In einer weiteren bevorzugten Ausführungsform ist es vorgesehen, dass die Einblendung der Schablone erkannt wird und Ausrichthinweise für die Kamera oder Scanvorrichtung in Abhängigkeit von der eingeblendeten Position der Schablone abgegeben werden. Gerade nach der Einblendung der Schablone in das virtuelle Bild werden Ausrichthinweise für die Kamera oder Scanvorrichtung aktiviert. Dementsprechend wird die eingeblendete Position der Schablone erfasst und als der Ausgangspunkt für die Ausrichtung verwendet. Die Ausrichthinweise in Form von z.B. Pfeilen werden basierend auf dieser Position und der Position des Zahns bzw. des Dentalhilfselements automatisch generiert und dann angezeigt.

In einer weiteren bevorzugten Ausführungsform ist es vorgesehen, dass die Ausrichthinweise die Fokussierung oder den elektronisch steuerbaren Erfassungsbereich der Kamera betreffen und basierend hierauf die Erfassung des Bildes bei Bedarf geändert wird. Die Fokussierungshinweise werden basierend auf dem aktuellen Abstand zwischen dem Zahn und der Kamera/Scanvorrichtung generiert, und es wird basierend auf der aktuellen Position der Kamera/Scanvorrichtung und der Orientierung der Kamera/Scanvorrichtung und dem Winkel der Kamera/Scanvorrichtung zum Dentalhilfselement auf eine etwaige Änderung des elektronisch steuerbaren Erfassungsbereichs der Kamera hingewiesen.

In einer weiteren bevorzugten Ausführungsform ist es vorgesehen, dass die Ausrichthinweise als optische und/oder akustische und/oder mechanische Hinweise für den Benutzer der Kamera ausgebildet sind. Optische Ausrichthinweise können z.B. die vorgenannten Pfeile oder andere Symbole sein, die geeignet sind, zur zutreffenden Ausrichtung der Kamera oder Scanvorrichtung den Benutzer klar anzuweisen.

Akustische Hinweise sind z.B. in Form von Sprachausgaben wie - "Kamera ist jetzt verdreht!" oder "Falscher Abstand!" - realisiert, über welche entsprechende Angaben dem Benutzer kommuniziert werden können.

In einer weiteren bevorzugten Ausführungsform ist es vorgesehen, dass die Übereinstimmung oder Deckung zwischen der Schablone und der Markierung oder einem Teil des Dentalhilfselements durch eine optische, akustische oder mechanische Anzeige oder durch Auslösen der Kamera signalisiert wird.

Bei einer zutreffenden, vollständigen Deckung der Schablone mit der Markierung kann auf der Anzeigevorrichtung der Kamera oder Scanvorrichtung beispielsweise die folgende Angabe angezeigt werden: "Ausrichtung gegeben!". Alternativ oder zusätzlich dazu kann der Benutzer in einer akustischen Weise, die von der akustischen Anzeige während der Ausrichtungsphase unterschiedlich ist, über die gegebene Ausrichtung der Kamera informiert werden.

In einer weiteren bevorzugten Ausführungsform ist es vorgesehen, dass die Markierung oder der Teil des Dentalhilfselements für die Erkennung eines Winkelfehlers in einer Linie angeordnete Punkte oder Linien aufweist.

Es ist besonders günstig, dass bei einem Farbschlüssel aus würfelförmigen Farbmustern bzw. einem Keramikgrid die Farbmuster über einen definierten Spaltenabstand voneinander getrennt werden. Innerhalb der Spalte können erfindungsgemäß in einer Linie angeordnete Punkte oder Linien vorgesehen sein.

Diese Punkte oder Linien sind während der Ausrichtung durch die Kamera nur sichtbar, wenn die Kamera zu dem Farbschlüssel bzw. dem Zahn orthogonal gelegt ist, also, wenn der vorgegebene, optimale Aufnahmewinkel erreicht ist.

An der Schablone können ebenfalls solche Punkte oder Linien vorgesehen sein. Ob die Punkte oder Linien am Farbschlüssel mit der entsprechenden Punktereihe oder Markierung der Schablone übereinstimmen oder nicht, ist durch die Kamera oder Scanvorrichtung zur Feststellung eines Winkelfehlers erfassbar.

Weitere Vorteile, Einzelheiten und Merkmale ergeben sich aus der nachfolgenden Beschreibung von Ausführungsbeispielen der Erfindung anhand der Zeichnungen.

Es zeigen:
- Fig. 1: eine schematisch dargestellte Anordnung mit einer Ausführungsform des beim erfindungsgemäßen Verfahren verwendeten Minifarbschlüssels und mit drei Schneidezähnen in Vorderansicht;
- Fig. 2: eine schematisch dargestellte Anordnung mit einer weiteren Ausführungsform des beim erfindungsgemäßen Verfahren verwendeten Minifarbschlüssels und mit drei Schneidezähnen in Vorderansicht;
- Fig. 3a: einen schematisch dargestellten Zustand der Markierung und der Schablone während der Ausführung einer Ausführungsform des erfindungsgemäßen Verfahrens;
- Fig. 3b: einen weiteren schematisch dargestellten Zustand der Markierung und der Schablone während der Ausführung der Ausführungsform des erfindungsgemäßen Verfahrens gemäß Fig. 3a;
- Fig. 3c: einen weiteren schematisch dargestellten Zustand der Markierung und der Schablone während der Ausführung der Ausführungsform des erfindungsgemäßen Verfahrens gemäß Fig. 3a;
- Fig. 3d: einen weiteren schematisch dargestellten Zustand der Markierung und der Schablone während der Ausführung der Ausführungsform des erfindungsgemäßen Verfahrens gemäß Fig. 3a;
- Fig. 4a: einen schematisch dargestellten Zustand der Markierung und der Schablone während der Ausführung einer weiteren Ausführungsform des erfindungsgemäßen Verfahrens;
- Fig. 4b: einen weiteren schematisch dargestellten Zustand der Markierung und der Schablone während der Ausführung der Ausführungsform des erfindungsgemäßen Verfahrens gemäß Fig. 4a;
- Fig. 4c: einen weiteren schematisch dargestellten Zustand der Markierung und der Schablone während der Ausführung der Ausführungsform des erfindungsgemäßen Verfahrens gemäß Fig. 4a;
- Fig. 5: eine weitere schematisch dargestellte Ausführungsform des im erfindungsgemäßen Verfahren verwendeten Minifarbschlüssels; und
- Fig. 6: ein Blockdiagramm für den Ablauf einer Ausführungsform des erfindungsgemäßen Verfahrens.

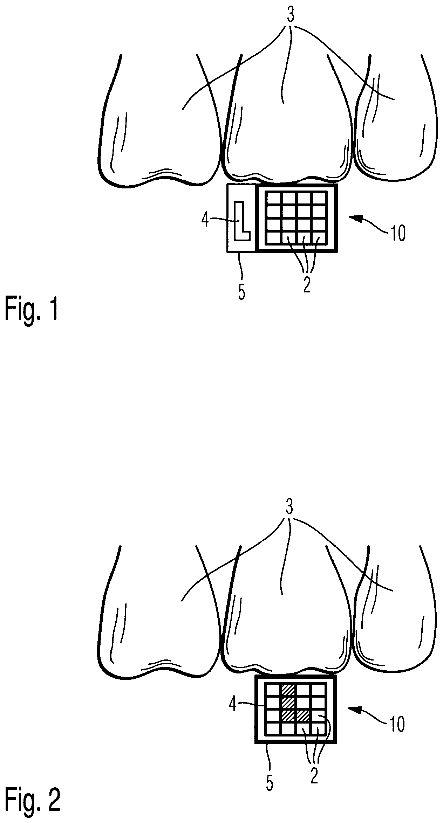

Die in Fig. 1 dargestellte Ausführungsform des im erfindungsgemäßen Verfahren verwendeten Minifarbschlüssels 10 ist an einem der dargestellten Schneidezähne 3 in an sich bekannter Weise befestigt angeordnet. Es wird zum Vergleich der Farben des Minifarbschlüssels 10 mit der Farbe der Schneidezähne 3, insbesondere des mittig stehenden Schneidezahns 3, für die Farbbestimmung durch eine Kamera oder Scanvorrichtung mindestens ein Foto aufgenommen.

Der gemäß Fig. 1 dargestellte Minifarbschlüssel 10 weist sechzehn Farbmuster 2 auf, die nach der Art einer Vier-Mal-Vier-Matrix angeordnet sind. Benachbart der Matrix ist eine L-förmige Markierung 4 auf einem Substrat 5 angeordnet. Für die Ausrichtung der Kamera oder Scanvorrichtung wird eine Schablone 6 der Kamera oder Scanvorrichtung mit der Markierung 4 in Deckung gebracht.

Die in Fig. 2 dargestellte Ausführungsform des beim erfindungsgemäßen Verfahren verwendeten Minifarbschlüssels 10 unterscheidet sich von der in Fig. 1 dargestellte Ausführungsform darin, dass das Substrat 5 und die hierauf aufgelegte Markierung 4 erfindungsgemäß nicht mehr erforderlich sind, sondern ein Teil der Matrix - entsprechend dem gemäß Fig. 2 durch schräge Linien bezeichneten Teil - selbst eine L-förmige Markierung bildet. Für die Ausrichtung der Kamera oder Scanvorrichtung wird anschließend die Schablone mit diesem Teil des Farbmuster 2 in Deckung gebracht.

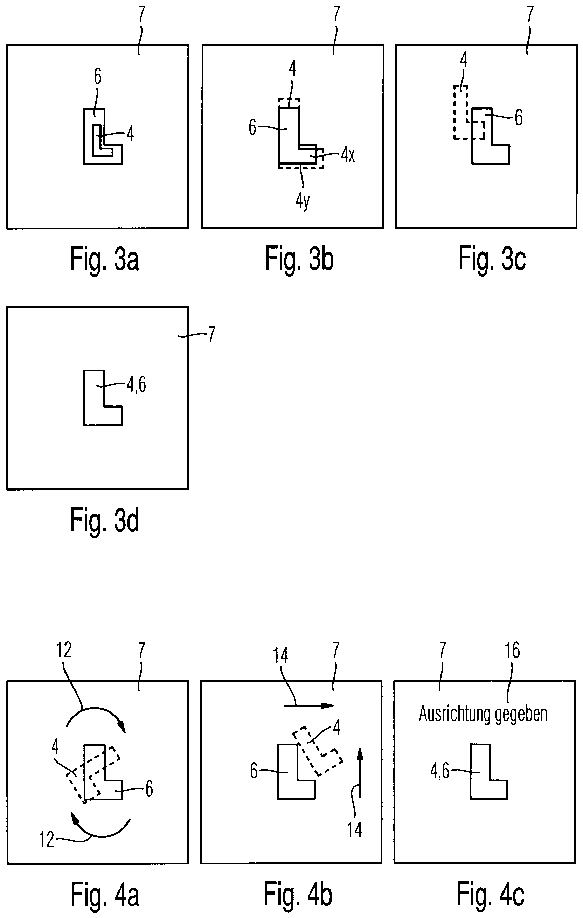

Gemäß den Figuren 3a bis 4c ist je in dem Erfassungsbereich 7 der Kamera oder Scanvorrichtung ein Zustand der Markierung 4 und der Schablone 6 während der Ausrichtung der Kamera oder Scanvorrichtung angezeigt. Es sind im Hinblick auf den Minifarbschlüssel 10 lediglich seine Markierung 4 dargestellt. Die (anderen) Farbmuster 2 und das etwaige Substrat 5 des Minifarbschlüssels 10 sind nicht dargestellt.

In der gemäß den Fig. 3a bis 3d dargestellten Ausführungsform des erfindungsgemäßen Verfahrens wird eine mit der Markierung 4 kongruente, L-förmige Schablone 6 verwendet, die auf einer Anzeigevorrichtung der Kamera oder Scanvorrichtung eingeblendet wird.

Aus Fig. 3a ist ersichtlich, dass in dem Erfassungsbereich 7 der Kamera oder Scanvorrichtung die Markierung 4 wesentlich kleiner als die Schablone 6 ist und innerhalb des ausgeschnittenen Teils dieser angezeigt ist. Dies bedeutet, dass der Abstand zwischen der Kamera oder Scanvorrichtung und dem Minifarbschlüssel 10 deutlich größer als der Soll-Abstand ist. Der Bediener der Kamera oder Scanvorrichtung sollte dann dementsprechend die Kamera oder Scanvorrichtung an den Minifarbschlüssel 10 annähern.

Gemäß Fig. 3b ist in dem Erfassungsbereich 7 der Kamera oder Scanvorrichtung die Markierung 4 ein wenig größer als die Schablone 6 angezeigt. Dies bedeutet, dass der Abstand zwischen der Kamera oder Scanvorrichtung und dem Minifarbschlüssel 10 ein wenig zu klein ist. Die Markierung 4 weist gemäß Fig. 3b einen innerhalb des ausgeschnittenen Teils der Schablone 6 sichtbaren Teil 4x und einen außerhalb des ausgeschnittenen Teils der Schablone 6 aufgrund des undurchsichtigen Materials der Schablone 6 nicht klar sichtbaren Teil 4y auf. Der sichtbare Teil 4x der Markierung 4 hat eine relativ natürliche Farbe, während der nicht klar sichtbare Teil 4y der Markierung 4 eine opake Farbe aufweist.

Erfindungsgemäß wird der Farbunterschied zwischen der natürlichen Farbe und der opake Farbe ausgenutzt. Es ist für den Benutzer der Kamera oder Scanvorrichtung besonders vorteilhaft, bei einer knappen Deckung durch diesen Farbunterschied festzustellen, dass sich die Schablone 6 noch nicht vollständig mit der Markierung 4 deckt.

Aus Fig. 3c ist ersichtlich, dass die Relativposition der Kamera oder Scanvorrichtung zum Minifarbschlüssel 10 nicht optimal ist. Der Bediener der Kamera oder Scanvorrichtung sollte dann dementsprechend die Position der Kamera oder Scanvorrichtung an den Minifarbschlüssel 10 anpassen.

Fig. 3d zeigt eine erfolgreiche Deckung der Schablone 6 mit der Markierung 4.

In der gemäß den Fig. 4a bis 4c dargestellten Ausführungsform des erfindungsgemäßen Verfahrens wird eine mit der Markierung 4 kongruente, L-förmige Schablone 6 verwendet, die als virtuelles Bild in der Kamera oder Scanvorrichtung hinterlegt ist. Auf einer optischen Fläche der Kamera oder Scanvorrichtung werden Pfeile 12, 14 und schriftliche Angaben 16 als Hilfselemente eingeblendet, die dazu dienen, eine Annährung an die Deckung und/oder eine erfolgreiche Deckung zu signalisieren.

Aus Fig. 4a ist ersichtlich, dass die Schablone 6 zu der Markierung 4 verdreht ist, also die Kamera oder Scanvorrichtung zu dem Minifarbschlüssel 10 verdreht ist. Dies wird durch die Kamera oder Scanvorrichtung in an sich bekannter Weise in Echtzeit erkannt. Dementsprechend wird erfindungsgemäß auf der Anzeigevorrichtung der Kamera oder Scanvorrichtung ein Hinweis in Form zweier einander gegenüberliegender, nach innen gebogener Pfeile 12 auf das Drehen der Kamera oder Scanvorrichtung angezeigt.

Gemäß Fig. 4b ist die Kamera oder Scanvorrichtung nicht nur zu dem Minifarbschlüssel 10 verdreht, sondern sie hat zu dem Minifarbschlüssel 10 auch einen falschen Abstand und befindet sich in einer falschen Position.

Erfindungsgemäß wird in diesem Fall durch die Kamera oder Scanvorrichtung bestimmt, dass zunächst die Position der Kamera oder Scanvorrichtung zu justieren ist. Dementsprechend wird auf der Anzeigevorrichtung der Kamera oder Scanvorrichtung ein Hinweis in Form eines nach oben weisenden Pfeils 14 und eines nach rechts weisenden Pfeils 14 auf die Beweigung der Kamera oder Scanvorrichtung nach oben rechts hin angezeigt.

Es wird erfindungsgemäß durch die Kamera oder Scanvorrichtung eine erfolgreiche Deckung der Schablone 6 mit der Markierung 4 erkannt und zugleich automatisch auf der Anzeigevorrichtung mit den schriftlichen Angaben 16 "Ausrichtung gegeben!" indiziert (s. Fig. 4c).

Die automatische Erkennung der Deckung durch die Kamera oder Scanvorrichtung gemäß den Figuren 4a bis 4c hat erfindungsgemäß im Vergleich mit der menschlichen Beobachtung eine erheblich höhere Präzision.

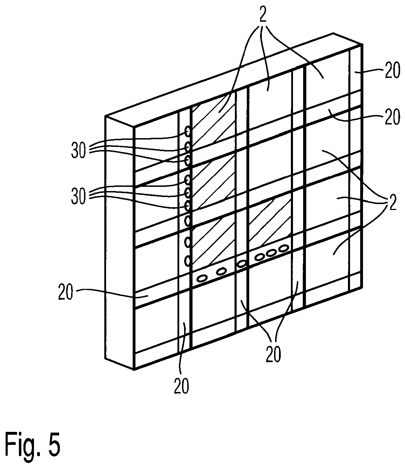

In der gemäß Fig. 5 dargestellten Ausführungsform des Minifarbschlüssels 10 werden die Farbmuster 2 über einen definierten Spaltenabstand 20 voneinander getrennt. Die durch schräge Linien bezeichneten Farbmuster 2 bilden die Markierung 4 für die Ausrichtung.

Erfindungsgemäß sind in den diesen Farbmustern 2 benachbarten Spalten 20 eine Vielzahl von Punkten 30 angeordnet, die bevorzugt auch farbig sein können. Diese Punkte 30 sind bei dem Ausrichtungsprozess durch die Kamera nur sichtbar, wenn die Kamera zu dem Farbschlüssel 10 orthogonal ausgerichtet ist. Erst dann ist der vorgegebene optimale Aufnahmewinkel erreicht.

In einer nicht dargestellten Ausführungsform des Minifarbschlüssels 10 ist es vorgesehen, dass die Markierung 4 die Farbe z.B. Grün hat und lediglich bei der genauen Vorderansicht grün aussieht, während sie bei anderen Betrachtungswinkeln in anderen Farben erscheint. Dadurch wird erfindungsgemäß ein zutreffender Betrachtungswinkel für die Aufnahme gewährleistet.

In einer weiteren nicht dargestellten Ausführungsform des Minifarbschlüssels 10 werden zur Prüfung der geforderten Orthogonalität zwischen der Kamera oder Scanvorrichtung und dem Minifarbschlüssel 10 die Außenkontur des Minifarbschlüssels 10 berücksichtigt und ausgenutzt. Hierzu wird beispielsweise vorab eine vorgegebene Außenkontur des Minifarbschlüssels 10 entsprechend der orthogonalen Anordnung der Kamera und dem Minifarbschlüssel 10 in der Kamera oder Scanvorichtung abgespeichert. Bei der Ausrichtung wird diese vorgegebene Außenkontur mit der durch die Kamera oder Scanvorrichtung erfassten Außenkontur des Minifarbschlüssels 10 verglichen. Bei einer Übereinstimmung wird eine geforderte Orthogonalität zwischen der Kamera oder Scanvorrichtung und dem Minifarbschlüssel 10 bestätigt.

In einer weiteren nicht dargestellten Ausführungsform des Minifarbschlüssels 10 werden mehr als eine Markierung mit unterschiedlichen Farben verwendet. Eine farbliche Unterscheidung garantiert erfindungsgemäß die korrekte Ausrichtung der Kamera oder Scanvorrichtung zum Minifarbschlüssel 10.

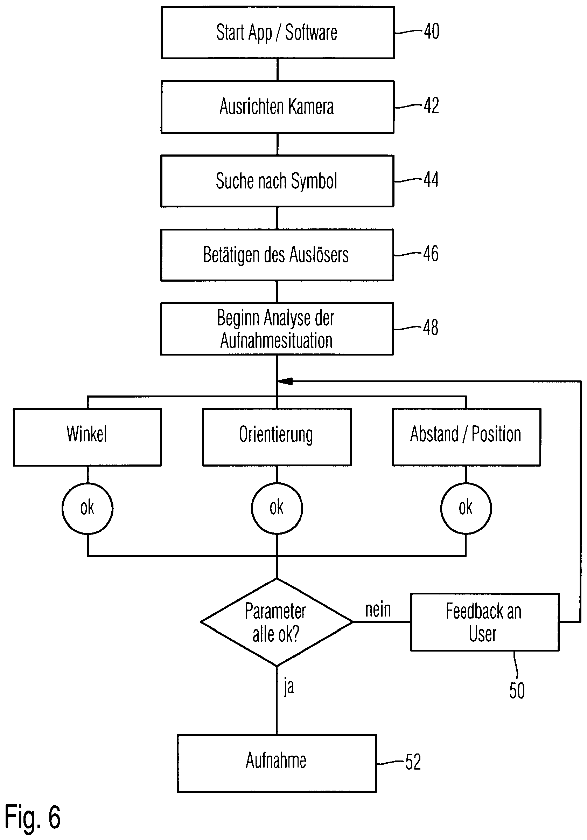

Zur Ausführung des in Fig. 6 dargestellten, erfindungsgemäßen Verfahrens kommt z.B. ein handelsübliches Smartphone mit einer entsprechenden App zum Einsatz. Für die Ausrichtung der Kamera des Smartphones wird zunächst die App gestartet (s. Schritt 40). Anschließend fordert die App den Benutzer auf, die Ausrichtung vorzunehmen (s. Schritt 42), indem der Benutzer durch die Annäherung der Kamera an den Minifarbschlüssel 10 ein auf dem Bildschirm des Smartphones angezeigtes Symbol bzw. eine Schablone 6 sucht (s. Schritt 44). Das Finden des Symbols wird bestätigt (s. Schritt 46) und führt zu einer Analyse der Aufnahmesituation (s. Schritt 48). Falls die für die Aufnahme erforderlichen Parameter, wie der Aufnahmenwinkel, die Orientierung der Kamera, der Abstand und der Position der Kamera zu dem Symbol, nicht erfüllt sind, informiert die App den Benutzer darüber und fordert sie ihn auf, die Kamera zu kalibrieren (s. Schritt 50). Wenn alle diesen Parameter erfüllt sind, wird ein Foto des Minifarbschlüssels 10 und der zu vergleichenden Zähne 3 aufgenommen (s. Schritt 52).

## Patentansprüche

1. Verfahren zur Annäherung an eine ausgerichtete relative Position zwischen einer Kamera oder Scanvorrichtung und einem Dentalhilfselement (10), insbesondere via App auf einem Smartphone, für die Aufnahme des Dentalhilfselements (10), wie eines Minifarbschlüssels (10), **dadurch gekennzeichnet,**
- **dass** auf dem Dentalhilfselement (10) eine Markierung (4) angebracht ist, und/oder dass mindestens ein Teil des Dentalhilfselements (10) als Markierung (4) verwendet wird,
- **dass** eine mit der Markierung (4) kongruente oder mathematisch ähnliche Schablone (6) auf einer Anzeigevorrichtung der Kamera oder Scanvorrichtung eingeblendet wird, und
- **dass** für die Annäherung an die ausgerichtete relative Position zwischen der Kamera oder Scanvorrichtung und dem Dentalhilfselement eine Änderung des Deckungsgrades der Schablone (6) mit der Markierung (4) oder dem einen Teil des Dentalhilfselements (10) erfasst wird.

2. Verfahren nach Anspruch 1 **dadurch gekennzeichnet,**
- **dass** in der Kamera oder in der Scanvorrichtung oder in einem Speicher für die Kamera oder in einem Speicher für die Scanvorrichtung die Schablone (6) als virtuelles Bild oder als charakterisierende Eigenschaften der Markierung (4) oder mindestens als ein Teil des Dentalhilfselements (10), insbesondere bezüglich der Entfernungen von Punkten voneinander und/oder der Winkel zwischen Linien und/oder der Positionen von Punkten und Linien und/oder der Farbwerte von Punkten, hinterlegt ist bzw. sind, und
- **dass** für die Annäherung der Deckungsgrad und/oder die Änderung des Deckungsgrades signalisiert wird, der, an die ausgerichtete relative Position zwischen der Kamera oder Scanvorrichtung und dem Dentalhilfselement basierend auf den hinterlegten Eigenschaften die Eigenschaften der Markierung (4) oder des Teils des Dentalhilfselements (10) gesucht werden, wobei insbesondere beim Suchen eine Identifikation zumindest einer der Eigenschaften erfasst und signalisiert wird.

3. Verfahren nach Anspruch 1 oder 2, **dadurch gekennzeichnet, dass** die Markierung (4) mit mindestens einer Asymmetrie vorgesehen ist.

4. Verfahren nach Anspruch 2 oder 3, **dadurch gekennzeichnet, dass** für die Annäherung an die ausgerichtete relative Position zwischen der Kamera oder Scanvorrichtung und dem Dentalhilfselement die Entfernung zwischen der Schablone (6) und der Markierung (4) oder dem Teil des Dentalhilfselements (10) angezeigt wird und/oder die Änderung dieser Entfernung signalisiert wird.

5. Verfahren nach einem der vorhergehenden Ansprüche, **dadurch gekennzeichnet, dass** für die Annäherung an die ausgerichtete relative Position zwischen der Kamera oder Scanvorrichtung und dem Dentalhilfselement die Schablone (6) mit der Markierung (4) oder dem einen Teil des Dentalhilfselements (10) in Deckung gebracht oder im Wesentlichen in Deckung gebracht wird, oder zueinander ausgerichtet werden.

6. Verfahren nach einem der vorhergehenden Ansprüche, **dadurch gekennzeichnet, dass** Hilfselemente wie Pfeile (12, 14) auf einer optischen Fläche (7) der Kamera oder Scanvorrichtung eingeblendet werden, wenn eine Deckung noch nicht erreicht ist, wobei die Hilfselemente in die Richtung verweisen, in die die Deckung durch eine Relativbewegung zwischen dem Dentalhilfselement (10) bzw. einem Patienten mit dem Dentalhilfselement (10) und der Kamera oder Scanvorrichtung erreicht werden kann.

7. Verfahren nach einem der vorhergehenden Ansprüche, **dadurch gekennzeichnet, dass** die Schablone (6) auf einer optischen Fläche (7) der Kamera oder Scanvorrichtung, insbesondere auf einem Smartphone, eingeblendet wird.

8. Verfahren nach einem der Ansprüche 1, 3 bis 7, **dadurch gekennzeichnet, dass** die physikalisch vorliegende Schablone (6) auf einem virtuellen Bild eingeblendet wird und von einer Bilderkennungsvorrichtung erfasst und in Daten umwandelt wird, und dass basierend auf den Daten für die Annäherung an die ausgerichtete relative Position zwischen der Kamera oder Scanvorrichtung und dem Dentalhilfselement eine Änderung des Deckungsgrades der Schablone (6) mit der Markierung (4) oder dem Teil des Dentalhilfselements (10) erfasst wird und/oder der Deckungsgrad und/oder die Änderung des Deckungsgrades signalisiert wird.

9. Verfahren nach einem der vorhergehenden Ansprüche, **dadurch gekennzeichnet, dass** Ausrichthinweise (12, 14, 16) für die Kamera oder Scanvorrichtung in Abhängigkeit von der Position der Schablone (6) relativ zu dem erfassten Bild abgegeben werden.

10. Verfahren nach Anspruch 9, **dadurch gekennzeichnet, dass** die Ausrichthinweise (12, 14) die Fokussierung oder den elektronisch steuerbaren Erfassungsbereich (7) der Kamera betreffen und basierend hierauf die Erfassung des Bildes bei Bedarf geändert wird.

11. Verfahren nach Anspruch 9, **dadurch gekennzeichnet, dass** die Ausrichthinweise (12, 14, 16) als optische und/oder akustische und/oder mechanische Hinweise, insbesondere als Vibrationen und/oder Impulse, für den Benutzer der Kamera ausgebildet sind.

12. Verfahren nach einem der Ansprüche 5 bis 11, **dadurch gekennzeichnet, dass** die Übereinstimmung oder Deckung zwischen der Schablone (6) und der Markierung (4) oder einem Teil des Dentalhilfselements (10) durch eine optische, akustische oder mechanische Anzeige (16) oder durch Auslösen der Kamera signalisiert wird.

13. Verfahren nach einem der vorhergehenden Ansprüche, **dadurch gekennzeichnet, dass** die Markierung (4) oder der Teil des Dentalhilfselements (10) für die Erkennung eines Winkelfehlers in einer Linie angeordnete Punkte (30) oder Linien aufweist, deren Übereinstimmung mit der entsprechenden Punktereihe oder Markierung der Schablone (6) zur Feststellung eines Winkelfehlers erfassbar ist.

## Claims

1. A method for approaching an aligned relative position between a camera or a scanning apparatus and a dental reference element (10), especially via app on a smartphone, for acquiring the dental reference element (10), such as a mini color key (10), **characterized**
- **in that** a marker (4) is attached to the dental reference element (10), and/or in that at least part of the dental reference element (10) is used as a marker (4),
- **in that** a template (6) congruent with or mathematically similar to the marker (4) is superimposed on a display apparatus of the camera or scanning apparatus, and
- **in that** for approaching the aligned relative position between the camera or the scanning apparatus and the dental reference element, a change in the degree of coverage of the template (6) and the marker (4) or the one part of the dental reference element (10) is detected.

2. The method according to claim 1 **characterized**
- **in that** in the camera or in the scanning apparatus or in a memory for the camera or in a memory for the scanning apparatus, the template (6) is deposited as a virtual image or as characterizing properties of the marker (4) or at least as one part of the dental reference element (10), and is deposited especially with respect to the distances of points from each another and/or the angles between lines and/or the positions of points and lines and/or the color values of points, and
- **in that**, for that approach, the degree of coverage and/or the change in the degree of coverage is signalized, which, to the aligned relative position between the camera or scanning apparatus and the dental reference element based on the deposited properties, the properties of the marker (4) or of part of the dental reference element (10) are searched for, wherein, especially when searching, an identification of at least one of the properties is detected and signalized.

3. The method according to claim 1 or 2, **characterized in that** the marker (4) is provided with at least one asymmetry.

4. The method according to claim 2 or 3, **characterized in that** for approaching the aligned relative position between the camera or the scanning-apparatus-and the dental reference element, the distance between the template (6) and the marker (4) or the part of the dental reference element (10) is indicated and/or the change of that distance is signalized.

5. The method according to one of the preceding claims, **characterized in that** for approaching the aligned relative position between the camera or the scanning apparatus and the dental reference element, the template (6) is brought into alignment or substantially into alignment with the marker (4) or the one part of the dental reference element (10), or they are brought into alignment with each other.

6. The method according to one of the preceding claims, **characterized in that** reference elements such as arrows (12, 14) are superimposed on an optical surface (7) of the camera or the scanning apparatus if congruence has not yet been achieved, the reference elements pointing towards the direction where congruence can be achieved by relative movement between the dental reference element (10) or a patient with the dental reference element (10) and the camera or the scanning apparatus.

7. The method according to one of the preceding claims, **characterized in that** the template (6) is superimposed on an optical surface (7) of the camera or a scanning apparatus, especially on a smartphone.

8. The method according to one of the claims 1,3 to 7, **characterized in that** the physically present template (6) is superimposed on a virtual image and will be detected and converted into data by an image recognition apparatus, and **in that**, based on the data for approaching the aligned relative position between the camera or the scanning apparatus and the dental reference element, a change in the degree of coverage of the template (6) and the marker (4) or the part of the dental reference element (10) is detected and/or the degree of coverage and/or the change in the degree of coverage is signalized.

9. The method according to any one of the preceding claims, **characterized in that** alignment indications (12,14,16) for the camera or the scanning apparatus are emitted as a function of the position of the template (6) in relation to the acquired image.

10. The method according to claim 9, **characterized in that** the alignment indications (12,14) relate to the focus or the electronically controllable detection range (7) of the camera and, based thereon, the detection of the image is changed as required.

11. The method according to claim 9, **characterized in that** the alignment indications (12,14,16) are designed as optical and/or acoustic and/or mechanical indications, especially as vibrations and/or pulses, for the user of the camera.

12. The method according to one of the claims 5 to 11, **characterized in that** correspondence or congruence between the template (6) and the marker (4) or part of the dental reference element (10) is signalized by an optical, acoustic or mechanical indication (16) or by triggering the camera.

13. The method according to one of the preceding claims, **characterized in that** the marker (4) or the part of the dental reference element (10) for detecting an angular error comprises points (30) or lines arranged in a line, the correspondence of which with the corresponding row of points or marker of the template (6) may be detected to detect an angular error.

## Revendications

1. Procédé pour le rapprochement à une position relative alignée entre une caméra ou un dispositif de balayage et un élément auxiliaire dentaire (10), en particulier par l'intermédiaire d'une application sur un smartphone, pour capter l'élément auxiliaire dentaire (10), tel qu'un mini-guide de teinte (10), **caractérisé**
- **en ce qu'**un marquage (4) est appliqué sur l'élément auxiliaire dentaire (10), et/ou en ce qu'au moins une partie de l'élément auxiliaire dentaire (10) est utilisée comme marquage (4),
- **en ce qu'**un gabarit (6) qui est congruent ou mathématiquement similaire au marquage (4) est superposé sur un dispositif d'affichage de l'appareil photo ou du dispositif de balayage, et
- **en ce que**, pour le rapprochement à la position relative alignée entre la caméra ou le dispositif de balayage et l'élément auxiliaire dentaire, une modification du degré de couverture du gabarit (6) avec le marquage (4) ou d'une partie de l'élément auxiliaire dentaire (10) est saisie.

2. Procédé selon la revendication 1 **caractérisé,**
- **en ce que** le gabarit (6) est déposé dans la caméra ou dans le dispositif de balayage ou dans une mémoire pour la caméra ou dans une mémoire pour le dispositif de balayage en tant qu'image virtuelle ou en tant que propriétés caractéristiques du marquage (4) ou au moins en tant qu'une partie de l'élément auxiliaire dentaire (10), en particulier en ce qui concerne la distance qui sépare les points entre eux et/ou les angles entre les lignes et/ou la position des points et des lignes et/ou la valeur des couleurs des points, et
- **en ce que** pour le rapprochement le degré de couverture et/ou la modification du degré de couverture est signalé, ou, à la position relative alignée entre la caméra ou le dispositif de balayage et l'élément auxiliaire dentaire sur la base des propriétés, les propriétés du marquage (4) ou de la partie de l'élément auxiliaire dentaire (10) sont recherchées où en particulier lors de la recherche, une identification d'au moins une des propriétés est saisie et signalée.

3. Procédé selon la revendication 1 ou 2, **caractérisé en ce que** pour le marquage (4) au moins une asymétrie est prévue.

4. Procédé selon la revendication 2 ou 3, **caractérisé en ce que** pour le rapprochement à la position relative alignée entre la caméra ou le dispositif de balayage et l'élément auxiliaire dentaire, la distance entre le gabarit (6) et le marquage (4) ou la partie de l'élément auxiliaire dentaire (10) est indiquée et/ou la modification de cette distance est signalée.

5. Procédé selon l'une quelconque des revendications précédentes, **caractérisé en ce que**, pour le rapprochement à la position relative alignée entre la caméra ou le dispositif de balayage et l'élément auxiliaire dentaire, le gabarit (6) est mis en alignement ou sensiblement en alignement avec le marquage (4) ou une partie de l'élément auxiliaire dentaire (10), ou sont mis en alignement l'un avec l'autre.

6. Procédé selon l'une quelconque des revendications précédentes, **caractérisé en ce que** des éléments auxiliaires tels que des flèches (12, 14) sont superposés sur une surface optique (7) de la caméra ou du dispositif de balayage lorsque l'alignement n'a pas encore été réalisé, où les éléments auxiliaires pointent dans la direction où l'alignement peut être réalisé par un mouvement relatif entre l'élément auxiliaire dentaire (10) ou un patient avec l'élément auxiliaire dentaire (10) et la caméra ou le dispositif de balayage.

7. Procédé selon l'une des revendications précédentes, **caractérisé en ce que** le gabarit (6) est superposé à une surface optique (7) de la caméra ou du dispositif de balayage, en particulier sur un smartphone.

8. Procédé selon l'une quelconque des revendications 1, 3 à 7, **caractérisé en ce que** le gabarit (6) physiquement présent est superposé à une image virtuelle et est détecté et converti en données par un dispositif de reconnaissance d'image, et **en ce que**, sur la base des données pour le rapprochement à la position relative alignée entre la caméra ou le dispositif de balayage et l'élément d'aide dentaire, une modification du degré de couverture du gabarit (6) avec le marquage (4) ou la partie de l'élément auxiliaire dentaire (10) est saisie et/ou le degré de couverture et/ou la modification du degré de couverture est signalée.

9. Procédé selon l'une des revendications précédentes, **caractérisé en ce que** des indications d'alignement (12, 14, 16) pour la caméra ou le dispositif de balayage sont fournies en fonction de la position du gabarit (6) par rapport à l'image capturée.

10. Procédé selon la revendication 9, **caractérisé en ce que** les indications d'alignement (12, 14) concernent la mise au point ou la plage de détection (7) de la caméra, contrôlable électroniquement, et, sur la base de celles-ci, la détection de l'image est modifiée selon les besoins

11. Procédé selon la revendication 9. **caractérisé en ce que** les indications d'alignement (12, 14, 16) sont conçues comme des indications optiques et/ou acoustiques et/ou mécaniques, en particulier sous forme de vibrations et/ou d'impulsions, pour l'utilisateur de la caméra.

12. Procédé selon l'une quelconque des revendications 5 à 11, **caractérisé en ce que** la correspondance ou la couverture entre le modèle (6) et le marquage (4) ou une partie de l'élément auxiliaire dentaire (10) est signalée par une indication visuelle, acoustique ou mécanique (16) ou par le déclenchement de la caméra.

13. Procédé selon l'une des revendications précédentes, **caractérisé en ce que** le marquage (4) ou la partie de l'élément auxiliaire dentaire (10) pour la détection d'une erreur angulaire présente des points (30) ou des lignes disposés en ligne, dont la correspondance avec la rangée de points correspondante ou le marquage correspondant du gabarit (6) peut être détectée pour la détection d'une erreur angulaire.
